# EUROPEAN PATENT SPECIFICATION

(11) **EP 3 968 464 B1**
(45) Date of publication and mention of the grant of the patent: **14.06.2023**
(21) Application number: 20806028.5
(22) Date of filing: 13.05.2020
(51) Int. Cl.: G06F 1/16, H01Q 13/10, H01Q 1/22, H01Q 21/28, H01Q 5/328

(54) **ELECTRONIC DEVICE**
ELEKTRONISCHE VORRICHTUNG
DISPOSITIF ÉLECTRONIQUE

(30) Priority: 14.05.2019 CN 201910397778
(43) Date of publication of application: 16.03.2022
(73) Proprietor: Honor Device Co., Ltd., Shenzhen, Guangdong 518040 (CN)
(72) Inventor: MAO, Zhengyan, Shenzhen, Guangdong 518129 (CN); WANG, Kemeng, Shenzhen, Guangdong 518129 (CN); WANG, Yuhui, Shenzhen, Guangdong 518129 (CN); MA, Ning, Shenzhen, Guangdong 518129 (CN)
(74) Representative: Isarpatent
(86) International application number: PCT/CN2020/089946
(87) International publication number: WO 2020/228719

(56) References cited:
- EP-A1- 2 434 576
- EP-A2- 3 029 767
- CN-A- 107 887 706
- CN-A- 108 832 301
- CN-A- 108 874 047
- CN-U- 203 300 789
- CN-U- 205 900 797
- CN-U- 205 900 797
- TW-A- 201 539 857
- US-A1- 2015 270 618
- US-A1- 2017 117 608
- CHEN SHU-CHUAN ET AL: "Integrated MIMO Slot Antenna on Laptop Computer for Eight-Band LTE/WWAN Operation", IEEE TRANSACTIONS ON ANTENNAS AND PROPAGATION, IEEE, USA, vol. 66, no. 1, 1 January 2018 (2018-01-01), pages 105-114, XP011675132, ISSN: 0018-926X, DOI: 10.1109/TAP.2017.2775284 [retrieved on 2017-12-27]

## Description

### TECHNICAL FIELD

This disclosure relates to the field of mobile communications technologies, and the invention in particular relates to an electronic device.

### BACKGROUND

With the rapid development of notebook computers, existing WiFi communications technologies hardly meet communication needs of notebook computers. Therefore, notebook computers use multi-band antennas such as LTE to enhance their wireless Internet access capabilities. This is a general trend and a major challenge for this product.

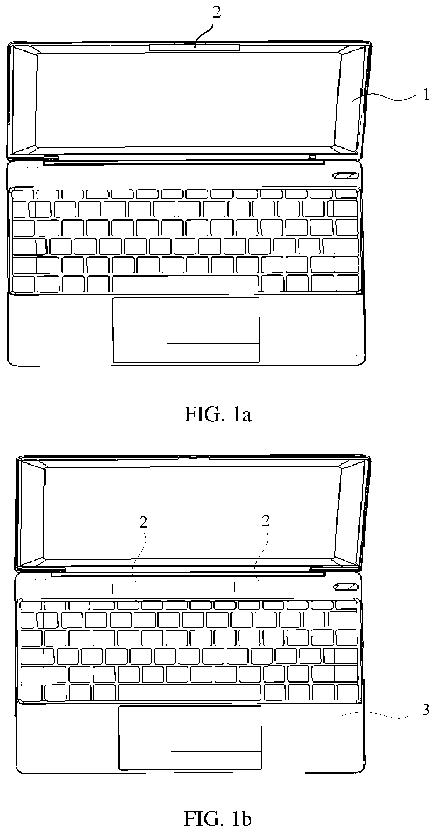

However, the notebook computer restricts the LTE multi-band antenna due to the characteristics of the product. The body of the existing notebook computer usually uses a fully metalized housing A, housing C, and housing D, limiting the design of the antenna. Therefore, when an antenna is arranged in the prior art, as shown in FIG. 1a. FIG. 1a shows a specific manner of arranging an LTE antenna. An LTE antenna 2 is arranged in a window on the top of a display screen, and a clearance of an LTE antenna 1 is 13-20 mm. When the LTE antenna 1 is arranged in the manner shown in FIG. 1a, the LTE antenna 1 exists far away from an interference source. However, because the LTE antenna 1 is located on the top of the display screen 1, the LTE antenna 1 inevitably occupies a specific area of the display screen, contradicting the full-screen requirement. The prior art further uses a form of the LTE antenna 2 shown in FIG. 1b. In FIG. 1b, the LTE antenna 2 is arranged in a window of the housing C 3 of the notebook computer. However, when this manner is used, isolation between the arranged LTE antenna 2 and the WiFi antenna is low, affecting performance of the LTE antenna 2. Therefore, there is an urgent need for a reasonable LTE antenna arrangement solution to improve the performance of the LTE antenna.

The publication "integrated MIMO slot antenna on laptop computer for eight-band LTE/WWAN operation" by the authors : Chen Shu-Chuan, Wu Po-Wei, Hsu Chung-I G. and Sze Jia-Yi, discloses a symmetrical deployment of two open-slot excitation antennas on two sides of a display ground plane and an incorporation of an asymmetric T-slot with two straight open-slot antennas which act as an isolation element.

CN 205900797 U discloses a rotating shaft provided between a first gap and a second gap in the middle of a first housing and a second housing in a manner such that three components namely, a first casing, a second casing and the rotating shaft, can conduct current.

EP3029767 A2 discloses a mobile terminal intented to use a first conductive member and a second conductive member forming part or all of a lateral appearance of the terminal body as a dipole antenna.

EP 2434576 A1 discloses an antenna structure which antenna structure can be desensitized to the influence of a slot, to avoid the operation of the antenna structures dependent on the position of an upper housing relative to a lower housing.

US 20170117608 A1 discloses a hinge barrel antenna system which includes a hinge barrel comprising a hinge barrel support member to couple a chassis base to a display device. The hinge barrel extends between the first hinge device and the second hinge device. The hinge barrel support member defines a first slot that is dimensioned such that the combination of the first slot and a feed structure emit radio waves having a first predetermined frequency when the feed structure is activated.

### SUMMARY

The object of the present invention is to provide an electronic device, so as to improve a clearance of an antenna and improve performance of the antenna. This object is solved by the independent claims and further embodiments and improvements of the present invention are listed in the dependent claims. Hereinafter, in the disclosure up to the "brief description of the drawings", "according to the invention" will be used to indicate features/steps of the independent claims and "according to an embodiment" or "embodiment" will be used to indicate embodiments of the invention. Whenever an "aspect", "arrangement" or similar is referred to, this designates features of embodiments of the invention, and "aspect of the invention" relates to the broadest embodiment as claimed in the independent claims.

According to a first aspect, according to the invention, an electronic device is provided. The electronic device includes a first part and a second part rotatably connected to the first part through a metal rotating shaft. The electronic device may be a notebook computer. The first part includes a display screen and a metal housing, and the display screen is arranged in the metal housing. In addition, the electronic device further includes at least one first antenna. The first antenna includes a radiating unit for radiating a signal. The radiating unit includes a slot arranged in the metal housing and a part of the metal rotating shaft coupled to the slot, and the slot is located on a side of the metal housing close to the metal rotating shaft. The slot is an L-shaped slot and a horizontal portion and a vertical portion of the L-shaped slot are respectively arranged along two adjacent side walls of the metal housing. In the foregoing technical solution, arranging the slot on a side of the metal housing close to the metal rotating shaft can improve positions of the first antenna and another antenna, thereby increasing a clearance between the antennas. In addition, arranging the metal rotating shaft and the slot to jointly serve as the radiating unit of the antenna improves performance of the antenna. Moreover, using a slot antenna as the first antenna can help achieve a full-screen effect of the display screen.

During specific arrangement of the radiating unit, a minimum distance from the slot to the metal rotating shaft is within a specified threshold. The specified threshold should ensure that the slot and the metal rotating shaft can be coupled and electrically connected, that is, the used minimum distance between the slot and the metal rotating shaft should ensure that the slot can excite a current on the metal rotating shaft.

During specific setting of the foregoing specified threshold, the specified threshold may be 2-10 mm, for example, a different distance such as 2 mm, 4 mm, 6 mm, 8 mm, or 10 mm.

During specific arrangement of the slot, the slot is located on the side of the metal housing close to the metal rotating shaft, and more specifically, located in a corner of the side of the metal housing close to the metal rotating shaft. The corner refers to a joint between two adjacent side walls of the metal housing.

During specific arrangement of the slot in the first aspect of the invention, arrangement of the horizontal portion and the vertical portion of the L-shaped slot along the two side walls forming a corner of the metal housing maximizes the use of the corner space of the metal housing.

During specific arrangement of the vertical portion and the horizontal portion, different sizes may be selected according to needs. For example, a length of the vertical portion is 20-70 mm, and a length of the horizontal portion is 5-40 mm. During specific arrangement, different solutions can be used. For example, the selected length of the vertical portion is 20 mm, 40 mm, 60 mm, or 70 mm. The horizontal portion is arranged in different sizes such as 5 mm, 10 mm, 20 mm, 30 mm, or 40 mm. In addition, selected widths of the horizontal portion and the vertical portion may be between 1-4 mm. For example, the widths of the horizontal portion and the vertical portion are 1 mm, 2 mm, 3 mm, 4 mm, or a different width.

In an example not forming part of the invention, in addition to the foregoing L-shaped slot, the slot may alternatively be a slot of another shape, such as a straight-shaped slot or another type of slot.

During specific arrangement of the first antenna, one or two first antennas may be arranged. For example, there are two first antennas, and slots of the two first antennas are symmetrically arranged on the metal housing. This improves a communication effect of the electronic device.

During specific arrangement of two first antennas, slots of the two first antennas are symmetrically arranged on two sides of the metal rotating shaft. This makes full use of the space on the metal housing to prepare the slot.

In addition, during arrangement of the slot, the slot is located on the side wall of the metal housing, or on a side of the metal housing away from the display screen. In this way, the slot may be arranged at different positions.

During arrangement of the slot, not claimed, the slot is further filled with an insulating layer to ensure integrity of appearance of the metal housing.

During specific arrangement of the first antenna, the first antenna further includes a feeding unit, the feeding unit includes a feed point and a feeder, and a tuning switch circuit is arranged on the feeder. An antenna with adjustable low frequency and ultra-wideband in intermediate and high frequencies without tuning is formed.

During specific arrangement of the foregoing tuning switch circuit, the tuning switch circuit includes a plurality of parallel branches, and a selection switch for connecting one of the branches and the feeder. At least one branch is provided with a capacitor or an inductor. The adjustment of different frequency bands can be implemented through the cooperation of the arranged selector switch and different branches.

During specific arrangement of the first antenna, the first antenna further includes a ground wire, the ground wire is connected to the slot, and the ground wire is provided with an inductor or a capacitor. A short circuit of a radio frequency band is formed through grounding of the capacitor or the inductor.

The foregoing first antenna may be a different antenna, for example, the first antenna is an LTE antenna, a GPS antenna, or a WiFi antenna.

In addition to the foregoing first antenna, the electronic device further includes a second antenna or a third antenna, achieving a good communication effect.

### BRIEF DESCRIPTION OF DRAWINGS

FIG. 1a is a schematic structural diagram of a notebook computer in the prior art;
FIG. 1b is a schematic structural diagram of another notebook computer in the prior art;
FIG. 2 is a schematic structural diagram of an electronic device according to an embodiment of this application;
FIG. 3 is a schematic structural diagram of an electronic device according to an embodiment of this application;
FIG. 4 is a specific schematic structural diagram of a first antenna according to an embodiment of this application;
FIG. 5 is a diagram of a return loss of an antenna according to an embodiment of this application; and
FIG. 6 is a Smith impedance chart of an antenna according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more.

An electronic device provided in the embodiments of this application is first described. The electronic device is a notebook computer or another foldable electronic device. The notebook computer is used as an example. The electronic device includes a housing A, a housing D, and a housing C. The housing A is a housing for fixing a display screen, and the housing D and the housing C enclose space for accommodating components such as a hard disk and a processor of the electronic device. During arrangement of an antenna, the antenna is arranged on the housing A. However, as electronic devices are developing towards a full screen, it is necessary to provide a new electronic device. The following describes the electronic device provided in the embodiments of this application with reference to accompanying drawings and embodiments.

To facilitate understanding of the electronic device provided in the embodiments of this application, a notebook computer is used as an example for description. However, it should be understood that the electronic device provided in the embodiments of this application is not limited to a notebook computer, and may alternatively be another foldable electronic device.

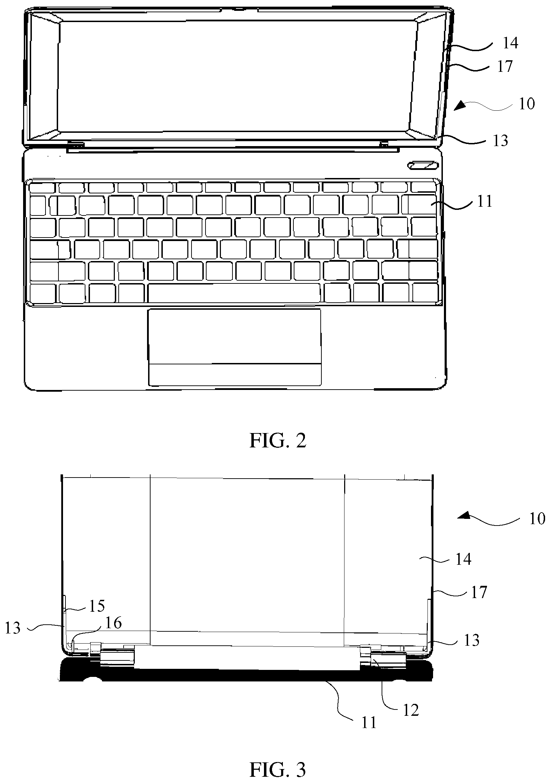

As shown in FIG. 2 and FIG. 3, the electronic device 10 provided in the embodiments of this application includes a first part and a second part 11 rotatably connected to the first part. The first part includes a display screen 14 and a metal housing 17 (housing A), and the display screen 14 is fixed on the metal housing 17. The second part 11 includes a housing D and a housing C, and the housing D and the housing C enclose space for accommodating electronic components such as a motherboard and a hard disk of the electronic device. For a specific connection manner of the housing D and the housing C, refer to a housing D and a housing C of a notebook computer in the prior art. When the first part and the second part 11 are rotatably connected, the connection can be implemented through the foregoing rotatable connection between the housing A and the housing D or housing C. Still referring to FIG. 3, when the first part and the second part 11 are rotatably connected, the rotational connection is implemented through a rotating shaft. Specifically, the housing A may be rotatably connected to the housing D or the housing C through the rotating shaft.

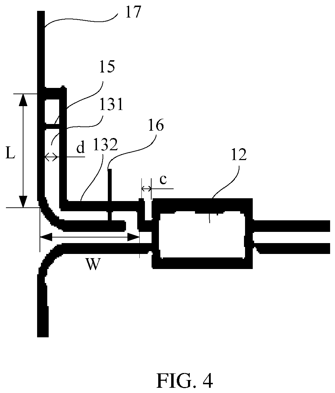

During specific arrangement of the rotating shaft, the first part and the second part 11 may be rotatably connected through one rotating shaft, or may be rotatably connected through two rotating shafts. During specific arrangement of the rotating shaft, the rotating shaft is made of a conductive material, the rotating shaft is a metal rotating shaft 12. The metal rotating shaft 12 not only serves as a structure for rotationally connecting the first part and the second part 11, but also can serve as a communications structure of the electronic device. In this case, the electronic device 10 further includes at least one first antenna, and the first antenna may be a different antenna, such as an LTE antenna, a GPS antenna, a WiFi antenna, or another type of antenna. However, no matter which type of antenna is used, during specific arrangement, the first antenna includes a feeding unit 16 and a radiating unit connected to the feeding unit 16, and the radiating unit is used for radiating a signal. Referring to FIG. 3 and FIG. 4 together, the radiating unit includes two parts: a slot 13 arranged in the metal housing 17 and a part of the metal rotating shaft 12 coupled to the slot 13. During specific arrangement of the slot 13, the slot 13 is located on a side of the metal housing 17 close to the metal rotating shaft 12. In addition, a specified minimum distance c between the slot 13 and the metal rotating shaft 12 is within a specified threshold. The specified threshold should ensure that the slot 13 and the metal rotating shaft 12 can be coupled and electrically connected. When the first antenna is working, the slot 13 can excite a current on the metal rotating shaft 12, so that the metal rotating shaft 12 can be used as a part of the radiating unit of the first antenna. When the slot 13 excites the metal rotating shaft 12 to generate a current, an end of the metal rotating shaft 12 closest to the slot 13 is excited to generate a current for participating in the radiation of the antenna. The foregoing minimum distance refers to the smallest distance from the slot 13 to the end of the metal rotating shaft 12.

During specific definition of the foregoing specified threshold, different range values may be selected. For example, in a specific implementable solution, the specified threshold may be 2-10 mm. When the slot 13 is arranged in the metal housing 17, the minimum distance c shown in FIG. 3 may be any length between 2-10 mm, such as 2 mm, 4 mm, 6 mm, 8 mm, or 10 mm.

Still referring to FIG. 3 and FIG. 4, a shape of the arranged slot 13 is an L-shaped slot, and the L-shaped slot includes two parts: a horizontal portion 132 and a vertical portion 131, respectively. The horizontal portion 132 and the vertical portion 131 of the slot 13 are respectively arranged along two adjacent side walls of the metal housing 17, and a bending direction of the L-shaped slot is the same as a bending direction along a corner of the metal housing 17. The corner refers to a joint between the two side walls of the metal housing 17. Still referring to FIG. 4, a first side wall of the metal housing 17 is rotatably connected to the second part 11 through the metal rotating shaft 12, and the horizontal portion 132 of the slot 13 is arranged along a length direction of the first side wall (a length direction parallel to the rotating shaft). In addition, the metal housing 17 further has a second side wall connected to the first side wall, and the vertical portion 131 of the slot 13 is arranged along a length direction of the second side wall (a length direction perpendicular to the rotating shaft). Therefore, the foregoing corner may refer to a joint between the first side wall and the second side wall. It can be learned from the foregoing description that the two parts of the arranged L-shaped slot are respectively arranged along the two side walls forming a corner of the metal housing 17, so as to maximize the use of the corner space of the metal housing 17.

Still referring to FIG. 4, the slot 13 is located on an outer side of the end of the metal rotating shaft 12. The foregoing outer side refers to: when the first part and the second part 11 are rotatably connected through one rotating shaft, an area along a length direction of the rotating shaft and outside the metal rotating shaft 12; when the first part and the second part 11 are rotatably connected through two metal rotating shafts 12, the foregoing outer side refers to a side away from the opposite ends of the two metal rotating shafts 12. For details, refer to the position for arranging the slot 13 shown in FIG. 3.

During specific arrangement of the slot 13, the slot 13 may be arranged at different positions of the metal housing 17. For example, when the metal housing 17 has a specific thickness, the metal housing 17 includes a bottom housing and a side wall connected to the bottom housing. The bottom housing of the metal housing 17 faces away from a display surface of the display screen 14, and the side wall of the metal housing 17 covers a side wall of the display screen 14. During arrangement of the slot 13, the slot 13 may be arranged on the side wall of the metal housing 17. Certainly, the slot 13 may alternatively be arranged in the bottom housing of the metal housing 17. However, regardless of whether the slot 13 is arranged on the side wall or the bottom housing, during arrangement of the slot 13, the slot 13 is filled with an insulating layer, such as an insulating layer of silica gel or plastic, to ensure integrity of the entire metal housing 17 in terms of appearance.

Still referring to FIG. 3 and FIG. 4, the horizontal portion 132 and the vertical portion 131 of the slot 13 may be arranged based on an actual situation. When the vertical side wall of the metal housing 17 has large space, a size of the vertical portion 131 may be set to be relatively large. However, during arrangement of the horizontal portion 132, because the metal housing 17 needs to reserve space for connection to the metal rotating shaft 12, a size is set to be relatively small. Certainly, during specific arrangement of the vertical portion 131 and the horizontal portion 132, specific sizes of the vertical portion 131 and the horizontal portion 132 to be arranged can be selected based on an operating frequency band of the first antenna. For example, in the slot 13 shown in FIG. 4, the length L of the vertical portion 131 is 20-70 mm. During specific arrangement, the length L of the vertical portion 131 may be any length between 20-70 mm, such as 20 mm, 40 mm, 60 mm, or 70 mm. During arrangement of the horizontal portion 132, the length W of the horizontal portion 132 is between 5-40 mm. During specific arrangement, the length W of the horizontal portion 132 may be any length between 5-40 mm, such as 5 mm, 10 mm, 20 mm, 30 mm, or 40 mm. In addition, selected widths d of the horizontal portion 132 and the vertical portion 131 may be between 1-4 mm. For example, the widths d of the horizontal portion 132 and the vertical portion 131 may be any width between 1-4 mm, such as 1 mm, 2 mm, 3 mm, or 4 mm. Therefore, during specific arrangement of the slot 13, the slot 13 may be a slot formed based on the values of L, W, and d listed above.

It should be understood that the slot 13 according to the invention is L-shaped and the slot 13 of the first antenna, in examples not forming part of the claimed invention, may alternatively be a straight-shaped slot, and the length direction of the slot 13 is a length direction along the first side wall. According to an example not forming part of the invention, the slot 13 of another shape may alternatively be used. However, no matter which form of the slot 13 is used, it should be ensured that the minimum distance between the slot 13 and the metal rotating shaft 12 is within the foregoing specified threshold, so as to ensure the electrical connection between the slot 13 and the metal rotating shaft 12.

In addition, for the radiating unit, in addition to the foregoing slot 13 and the part of the metal rotating shaft 12, a parasitic stub may further be used, and the parasitic stub is coupled to the radiating unit. The arrangement of the parasitic stub can improve a radiation effect of the radiating unit.

Still referring to FIG. 3 and FIG. 4, in addition to the radiating unit listed above, the first antenna further includes a feeding unit 16. During specific arrangement, the feeding unit 16 includes a feed point and a feeder connected to the feed point. When in use, the feed point couples a signal to the radiating unit through the feeder. The feed point is arranged on a circuit board of the electronic device 10 and connected to a radio frequency circuit on the circuit board. The foregoing connection is a common connection in the prior art, and details are not described herein again.

In addition, when the feeding unit 16 is connected to the radiating unit, a connection position between the feeder and the radiating unit is located on a side of the radiating unit close to the metal rotating shaft 12. As shown in FIG. 3 and FIG. 4, the radiating unit uses an L-shaped slot, the feeder of the feeding unit 16 is connected to the horizontal portion 132 of the slot 13. In addition, a tuning switch circuit may further be arranged on the arranged feeder to form an antenna with adjustable low frequency and ultra-wideband in intermediate and high frequencies without tuning.

During specific arrangement of the tuning switch circuit, the tuning switch circuit includes a plurality of parallel branches, and a selection switch for connecting one of the branches and the feeder. At least one branch is provided with a capacitor or an inductor. The adjustment of different frequency bands can be implemented through the cooperation of the arranged selector switch and different branches. During specific implementation, one of the branches of the parallel circuit is provided with a capacitor, and another branch is provided with an inductor, or an inductor and a capacitor are arranged and connected in series to form a circuit. Certainly, alternatively, capacitors with different capacitance values may be respectively arranged on multiple branches, or inductors with different inductance values may be respectively arranged on multiple branches. When in use, a selector switch is used to select different branches for connection with the radiating unit.

During specific arrangement of the first antenna, the first antenna further includes a ground wire 15, and the ground wire 15 is connected to the other side of the radiating unit. As shown in FIG. 3 and FIG. 4, when the radiating unit uses an L-shaped slot, the ground wire 15 is connected to the vertical portion 131 of the radiating unit. In addition, an inductor or a capacitor is further arranged on the arranged ground wire 15, and a short circuit of a radio frequency band is formed through grounding of the capacitor or the inductor arranged on the ground wire 15.

The electronic device provided in the embodiments of this application does not impose a limitation on a quantity of first antennas, and there may be one or two first antennas. FIG. 3 shows two first antennas and the two first antennas are symmetrically arranged on the metal housing 17. More specifically, the two first antennas are arranged at two opposite corners of the metal housing 17. As shown in FIG. 3, the radiating unit of each first antenna uses an L-shaped slot 13, and the slots 13 of the two first antennas are symmetrically arranged on two sides of the metal rotating shaft 12. For a specific arrangement manner, refer to the foregoing description of the slot 13. This can make full use of the space on the metal housing 17 to prepare the slot 13.

It can be learned from the foregoing description that in the electronic device 10 provided in the embodiments of this application, the first antenna is arranged at the corner of the metal housing 17, and the slot 13 and a part of the metal rotating shaft 12 are used as the radiating unit. In this way, the space of the metal housing 17 is fully used and the arranged slot 13 does not affect the full-screen development of the display screen 14 and the thinning development of the electronic device 10. The performance of the antenna and the full screen and thin profile of the electronic device 10 are well combined.

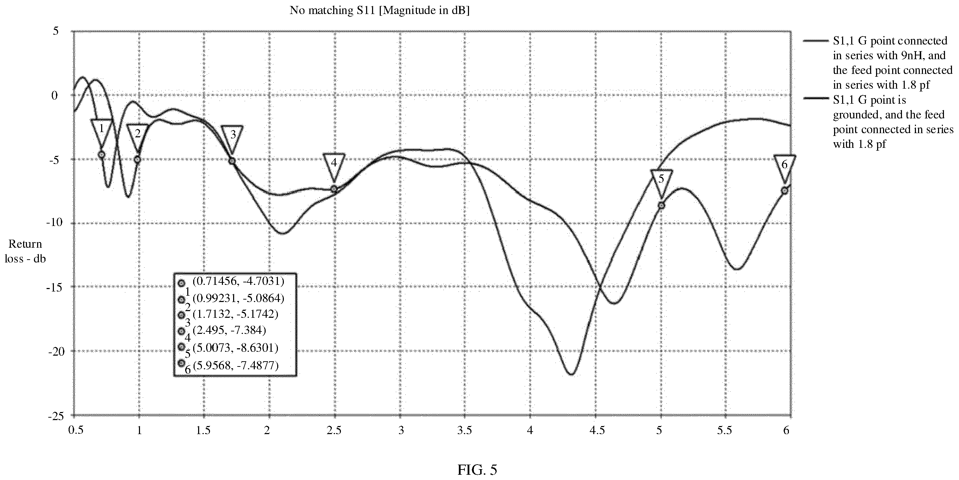

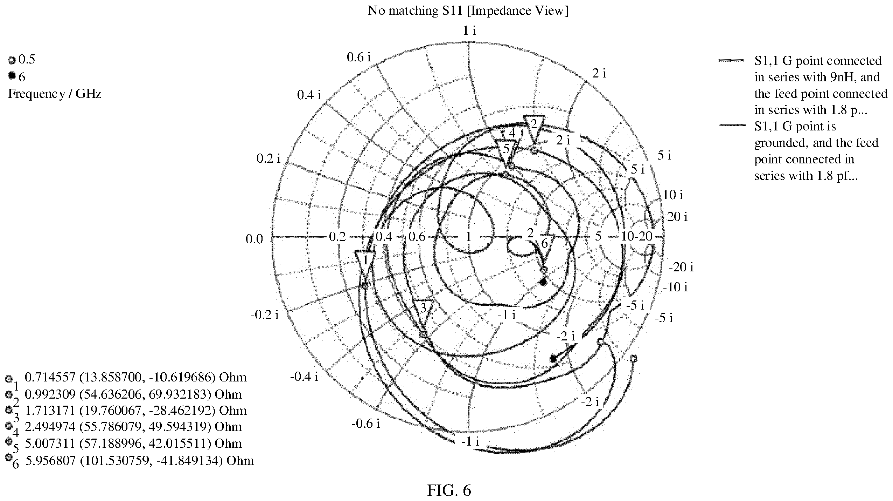

To facilitate the understanding of the performance of the first antenna provided in the embodiments of this application, the first antenna shown in FIG. 3 was simulated, and the results are shown in FIG. 5 and FIG. 6. First, referring to FIG. 5, it can be seen from FIG. 5 that a return loss of the first antenna provided in the embodiments of this application is less than -5 dB, and the performance of the first antenna is relatively good. It can be seen from FIG. 6 that the impedance of the first antenna provided in the embodiments of this application is relatively close to the center of the circle. The closer the impedance is to the center of the circle, the closer the impedance is to 50 ohms, and the better the performance of the antenna is.

Referring to FIG. 1a, FIG. 1b, and FIG. 2 together, it can be seen from the structure of the notebook computer shown in FIG. 1a that, the antenna is arranged on the side of the display surface of the display screen 14 in FIG. 1a, inevitably affecting the display area of the display screen 14. However, in the notebook computer provided in this application shown in FIG. 2, the slot 13 arranged in the metal housing 17 and the part of the metal rotating shaft 12 are used as the radiating unit. This does not affect the display surface of the display screen 14, and therefore further facilitates the full-screen development. However, in FIG. 1b, the antenna is arranged on the housing C of the notebook computer, but for the notebook computer, the housing C is provided with many electronic components and antennas. Arrangement of the antenna on the housing C inevitably affects isolation between the antennas. However, in the notebook computer shown in FIG. 2 of this application, the first antenna is arranged on the metal housing 17 away from the antenna arranged in the housing C, thereby improving the isolation between the antennas.

Certainly, it should be understood that, in addition to the foregoing first antenna, the electronic device 10 provided in the embodiments of this application may further include a second antenna or a third antenna. The second antenna or the third antenna may be a WiFi antenna or another antenna. During arrangement, for the arrangement positions of the second antenna and the third antenna, refer to the known antenna arrangement positions on the notebook computer. During arrangement of the first antenna, because the first antenna is arranged on the metal housing 17, there is a good clearance between the first antenna and another antenna.

The protection scope of this application shall be subject to the protection scope of the claims.

## Claims

1. An electronic device (10), comprising a first part and a second part (11) rotatably connected to the first part through a metal rotating shaft (12), wherein the first part comprises a display screen (14) and a metal housing (17);
the electronic device (10) further comprises at least one first antenna, each of the at least one first antenna comprises a radiating unit for radiating a signal, and the radiating unit comprises a slot (13) arranged in the metal housing (17) and a part of the metal rotating shaft (12) coupled to the slot (13);
**characterized in that**
the slot (13) is an L-shaped slot, and a horizontal portion (131) and a vertical portion (132) of the L-shaped slot are respectively arranged along two adjacent side walls of the metal housing (17).

2. The electronic device (10) according to claim 1, wherein the slot (13) is located on a side of the metal housing (17) close to the metal rotating shaft (12), wherein a minimum distance (c) from the slot (13) to the metal rotating shaft (12) is within a specified threshold, wherein the specified threshold is a specified minimum distance (c) between the slot (13) and the metal rotating shaft (12) which ensures that the slot (13) and the metal rotating shaft (12) are coupled and electrically connected.

3. The electronic device (10) according to claim 2, wherein the specified threshold is a length between 2-10 mm.

4. The electronic device (10) according to claim 1, wherein a length of the vertical portion is 20-70 mm, and a length of the horizontal portion is 5-40 mm.

5. The electronic device (10) according to any one of claims 1 to 4, wherein there are two first antennas, and slots (13) of the two first antennas are symmetrically arranged in the metal housing (17).

6. The electronic device (10) according to claim 5, wherein the slots (13) of the two first antennas are symmetrically arranged on two sides of the metal rotating shaft (12).

7. The electronic device (10) according to any one of claims 1 to 6, wherein each of the at least one first antenna further comprises a feeding unit, the feeding unit comprises a feed point and a feeder connecting the feed point and the radiating unit, and a tuning switch circuit is arranged on the feeder.

8. The electronic device (10) according to claim 7, wherein the tuning switch circuit comprises a plurality of parallel branches, and a selection switch for connecting one of the branches and the feeder; at least one branch is provided with a capacitor or an inductor.

9. The electronic device (10) according to any one of claims 1 to 8, wherein each of the at least one first antenna further comprises a ground wire, the ground wire is connected to the slot (13), and the ground wire is provided with an inductor or a capacitor.

10. The electronic device (10) according to any one of claims 1 to 9, wherein the at least one first antenna is an LTE antenna, a GPS antenna, or a WiFi antenna.

## Patentansprüche

1. Elektronische Vorrichtung (10), einen ersten Teil und einen zweiten Teil (11), der über eine rotierende Metallwelle (12) drehbar mit dem ersten Teil verbunden ist, umfassend, wobei der erste Teil einen Anzeigebildschirm (14) und ein Metallgehäuse (17) umfasst,
die elektronische Vorrichtung (10) ferner mindestens eine erste Antenne umfasst, jede der mindestens einen ersten Antenne eine Abstrahleinheit zum Abstrahlen eines Signals umfasst und die Abstrahleinheit einen Schlitz (13) umfasst, der in dem Metallgehäuse (17) angeordnet ist, und einen Teil der rotierenden Metallwelle (12), der mit dem Schlitz (13) gekoppelt ist,
**dadurch gekennzeichnet, dass**
der Schlitz (13) ein L-förmiger Schlitz ist und ein horizontaler Abschnitt (131) und ein vertikaler Abschnitt (132) des L-förmigen Schlitzes entsprechend entlang zweier angrenzender Seitenwände des Metallgehäuses (17) angeordnet sind.

2. Elektronische Vorrichtung (10) nach Anspruch 1, wobei sich der Schlitz (13) an einer Seite des Metallgehäuses (17) nahe der rotierenden Metallwelle (12) befindet, wobei ein minimaler Abstand (c) von dem Schlitz (13) zu der rotierenden Metallwelle (12) innerhalb eines spezifizierten Grenzwertes liegt, wobei der spezifizierte Grenzwert ein spezifizierter minimaler Abstand (c) zwischen dem Schlitz (13) und der rotierenden Metallwelle (12) ist, der gewährleistet, dass der Schlitz (13) und die rotierende Metallwelle (12) gekoppelt und elektrisch verbunden sind.

3. Elektronische Vorrichtung (10) nach Anspruch 2, wobei der spezifizierte Grenzwert eine Länge zwischen 2-10 mm beträgt.

4. Elektronische Vorrichtung (10) nach Anspruch 1, wobei eine Länge des vertikalen Abschnitts 20-70 mm beträgt und eine Länge des horizontalen Abschnitts 5-40 mm beträgt.

5. Elektronische Vorrichtung (10) nach einem der Ansprüche 1 bis 4, wobei zwei erste Antennen vorhanden sind und Schlitze (13) der zwei ersten Antennen symmetrisch in dem Metallgehäuse (17) angeordnet sind.

6. Elektronische Vorrichtung (10) nach Anspruch 5, wobei die Schlitze (13) der zwei ersten Antennen symmetrisch an zwei Seiten der rotierenden Metallwelle (12) angeordnet sind.

7. Elektronische Vorrichtung (10) nach einem der Ansprüche 1 bis 6, wobei jede der mindestens einen ersten Antenne ferner eine Speiseeinheit umfasst, die Speiseeinheit einen Speisepunkt und eine Speiseleitung umfasst, die den Speisepunkt mit der Abstrahleinheit verbindet, und eine Abstimmungsschalterschaltung an der Speiseleitung angeordnet ist.

8. Elektronische Vorrichtung (10) nach Anspruch 7, wobei die Abstimmungsschalterschaltung mehrere parallele Zweige umfasst und einen Auswahlschalter zum Verbinden eines der Zweige und der Speiseleitung, mindestens ein Zweig mit einem Kondensator oder einer Spule versehen ist.

9. Elektronische Vorrichtung (10) nach einem der Ansprüche 1 bis 8, wobei jede der mindestens einen ersten Antenne ferner ein Massekabel umfasst, das Massekabel mit dem Schlitz (13) verbunden ist und das Massekabel mit einer Spule oder einem Kondensator versehen ist.

10. Elektronische Vorrichtung (10) nach einem der Ansprüche 1 bis 9, wobei die mindestens eine Antenne eine LTE-Antenne, eine GPS-Antenne oder eine WiFi-Antenne ist.

## Revendications

1. Dispositif électronique (10) comportant une première partie et une deuxième partie (11) reliée de manière rotative à la première partie au moyen d'un axe rotatif métallique (12), la première partie comportant un écran d'affichage (14) et un boîtier métallique (17) ;
ce dispositif électronique (10) comportant en outre au moins une première antenne, chacune de cette au moins une première antenne comportant une unité de rayonnement pour rayonner un signal, et cette unité de rayonnement comportant une fente (13) disposée dans le boîtier métallique (17) et une partie de l'axe rotatif métallique (12) étant couplée à cette fente (13) ;
**caractérisé en ce que**
la fente (13) est une fente en forme de L, et une partie horizontale (131) et une partie verticale (132) de la fente en forme de L étant disposées respectivement le long de deux parois latérales adjacentes du boîtier métallique (17).

2. Dispositif électronique (10) selon la revendication 1, dans lequel la fente (13) est située sur un côté du boîtier métallique (17) près de l'axe rotatif métallique (12), une distance minimum (c) entre la fente (13) et l'axe rotatif métallique (12) étant dans les limites d'un seuil spécifié, ce seuil spécifié étant une distance minimum spécifiée (c) entre la fente (13) et l'axe rotatif métallique (12) qui fait en sorte que la fente (13) et l'axe rotatif métallique (12) sont couplés et connectés électriquement.

3. Dispositif électronique (10) selon la revendication 2, dans lequel le seuil spécifié est une longueur située entre 2 et 10 mm.

4. Dispositif électronique (10) selon la revendication 1, dans lequel une longueur de la partie verticale est située entre 20 et 70 mm, et une longueur de la partie horizontale est située entre 5 et 40 mm.

5. Dispositif électronique (10) selon l'une quelconque des revendications 1 à 4, dans lequel il y a deux premières antennes, et les fentes (13) des deux premières antennes sont disposées symétriquement dans le boîtier métallique (17).

6. Dispositif électronique (10) selon la revendication 5, dans lequel les fentes (13) des deux premières antennes sont disposées symétriquement sur deux côtés de l'axe rotatif métallique (12).

7. Dispositif électronique (10) selon l'une quelconque des revendications 1 à 6, dans lequel chacune de l'au moins une première antenne comprend en outre une unité d'alimentation, cette unité d'alimentation comprenant un point d'alimentation et un dispositif d'alimentation connectant le point d'alimentation et l'unité de rayonnement, et un circuit de commutateur de réglage étant disposé sur le dispositif d'alimentation.

8. Dispositif électronique (10) selon la revendication 7, dans lequel le circuit de commutateur de réglage comporte une pluralité de branches parallèles, et un commutateur de sélection pour connecter une des branches et le dispositif d'alimentation ; au moins une branche étant pourvue d'un condensateur ou d'une bobine d'induction.

9. Dispositif électronique (10) selon l'une quelconque des revendications 1 à 8, dans lequel chacune de l'au moins une première antenne comporte en outre un conducteur de terre, ce conducteur de terre étant connecté à la fente (13), et ce conducteur de terre étant pourvu d'une bobine d'inductance ou d'un condensateur.

10. Dispositif électronique (10) selon l'une quelconque des revendications 1 à 9, dans lequel l'au moins une première antenne est une antenne LTE, une antenne GPS ou une antenne WiFi.
